(19) Europäisches Patentamt
European Patent Office
Office européen des brevets

(11) Publication number: 0 148 100 B1

(12) EUROPEAN PATENT SPECIFICATION

(45) Date of publication of patent specification: 01.03.89

(51) Int. Cl.$^4$: F 16 L 11/08, B 29 D 23/22, B 29 C 53/58, B 29 D 23/00

(21) Application number: 84630188.5

(22) Date of filing: 11.12.84

(54) **A braided spiral reinforced hose and method for producing same.**

(30) Priority: 19.12.83 US 562665

(43) Date of publication of application: 10.07.85 Bulletin 85/28

(45) Publication of the grant of the patent: 01.03.89 Bulletin 89/09

(84) Designated Contracting States: DE FR GB IT

(56) References cited:
US-A-2 829 671
US-A-3 253 618
US-A-3 988 188
US-A-4 104 095
US-A-4 219 522
US-A-4 238 260
US-A-4 289 555
US-A-4 302 266
US-A-4 303 457

(73) Proprietor: THE GOODYEAR TIRE & RUBBER COMPANY
1144 East Market Street
Akron, Ohio 44316-0001 (US)

(72) Inventor: Piccoli, Dante Edward
5102 Parkhaven Northeast
Canton Ohio 44705 (US)
Inventor: Nadkarni, Pradeep Dattatraya
407 Abbyshire Road
Akron Ohio 44319 (US)

(74) Representative: Weyland, Joseph Jean Pierre
Goodyear Technical Center Luxembourg Patent Department Avenue Gordon Smith
L-7750 Colmar-Berg (LU)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 148 100 B1

## Description

This invention relates to a flexible hose having an elastomeric tube with an overlying braided reinforcement member and more particularly to a hose having improved crush resistance.

In applications such as hose used for the dispensing of gasoline, it is desirable for the hose to be flexible yet be capable of regaining its shape after being crushed in service. Hose structures are known in which a liner or tube is covered by two textile braids with a monofilament helically wound between the braids. This type of hose is known in the petroleum industry as a hard-wall helix type hose, available under the designation Flexwing™ gasoline hose, which is a trademark of The Goodyear Tire & Rubber Company. The process for building hoses of this construction requires a mandrel be used to support the tube during braiding and especially during application of the monofilament helix since the monofilament helix exerts a twisting force on the tube. Expensive methods such as lead press curing or fabric wrap curing are required due to the residual twisting force which remains in the uncured hose during the vulcanizing process.

Another known construction is shown in US—A—4,302,266 which describes a braided hose where the oppositely wrapped braided elements are each composed of a single strand of wire mixed with three strands of non-metallic textile fibers.

Another known construction is shown in US—A—2,829,671 which describes a braided hose where a high tensile braid member is interwoven with a relatively flexible web but requires an additional layer of reinforcement in an oppositely oriented winding in order to provide a balanced construction since only the high tensile braid member is wound under tension.

In accordance with the present invention, a lighter weight reinforced hose can be produced which has excellent resistance to kinking. Greater crush resistance is also imparted which means that the hose will regain its shape after it has been crushed. The hose also has an advantage in that it has no residual twisting stress and thus remains stable when placed under internal working pressure exhibiting no twisting in service. These advantages are accomplished by the hose as disclosed in appended claim 1.

The method used for manufacturing the hose of this construction has the advantage of being a non-mandrel hose building process and is adaptable to fully continuous length production. An additional advantage of the method of manufacturing of this hose is that economical curing methods such as open steam, continuous vulcanization utilizing molten salt or hot heat transfer medium, or various fluid bed continuous curing methods can be used. These advantages are accomplished by a non-mandrel method of manufacturing a flexible hose as described above which comprises the steps of extruding an unsupported elastomeric tube and applying a braided spiral sleeve around said elastomeric tube such that the tensions of the first and second braid members are substantially equal.

### Brief description of the drawings

Figure 1 is a side view of a section of a hose showing the preferred embodiment of this invention with a part in section and other parts broken away for clarity.

Figure 2 is a diagonal cross-sectional view of the braided spiral sleeve only as shown in Figure 1 taken on line 2—2.

Figure 3 is a diagonal cross-sectional view of the braided spiral sleeve only as shown in Figure 1 taken on line 3—3.

Figure 3a is an enlarged view of a portion of Figure 3.

Figure 4 is a simplified schematic representation of the method of manufacture of the hose of this invention.

Figure 5 is a pictorial representation of the hose of this invention used in a fluid transfer system.

### Detailed description of the invention

Referring to Figure 1 the hose 10 comprises an elastomeric tube 1 of a material suitable for conveying or containing the fluid to be transported. Any suitable rubber or thermoplastic elastomer known to be useful in hose applications may be used. These may include rubber polymers, such as polychloroprene, acrylonitrile-butadiene, styrene-butadiene, polyisoprene, ethylenepropylene-diene and natural rubber polymers. These polymers may be compounded with other known materials to achieve particular properties required for specific applications. The elastomeric tube 1 is surrounded by a braided spiral sleeve 2 consisting of a first braid member 3 which is composed of one or more relatively stiff monofilaments which are wound in a smooth helical path around the elastomeric tube. A single monofilament is shown for simplicity of illustration although it is to be understood that a plurality of monofilaments may be used to constitute the first braid member 3. The monofilament may be composed of any synthetic polymer suitable for fabrication into a monofilament having sufficient resistance to kinking to be useful. Polyesters, copolyesters, non-aromatic polyamides such as nylon, aromatic polyamides or fiberglass are the preferred materials for the monofilament of this invention. Polyester is most preferred due to the ease of attaining a strong cured bond with the surrounding elastomeric layers of the hose. The monofilament diameter is widely variable depending upon the requirements of the end-use application. Preferably the diameter may range from 0.1 to about 10 millimeters, with most preferred being between .3 and 2 millimeters. The second braid member 4 is wound in a helical pattern from an opposite direction. The second braid member 4 is interwoven with the first braid member 3. The second braid member 4 must be very flexible relative to the first braid member 3. Said second braid member may be preferably composed of conventionally used textile materials such as nylon, rayon, polyester, or fiberglass etc., filaments and yarns which are loosely twisted into a suitable textile material for braiding. The first braid member 3 follows a smooth helical course and exhibits no crimping during the braiding operation. The second braid member 4 is interwoven in a helical pattern from an opposite direction and exhibits crimping or kinking at each point where it is interwoven with the first braid member 3. Both braid members must be under substantially equal tension during the braiding step. After braiding, the relatively stiff first braid member remains uncrimped and thus lies substantially in an imaginary cylindrical surface surrounding said elastomeric tube at the appropriately spaced radial distance from the outer surface of said elastomeric tube 1. The embodiment shown in Figure 1 includes a conventional braided textile reinforcement sleeve 5 which may be optionally utilized if the particular hose application requires additional burst strength in the finished hose. A rubber insulation layer 6 may be applied between braided sleeves if more than one such sleeve is utilized.

An elastomeric cover 7 is shown surrounding the outermost braided layer and may be composed of any suitable rubber or thermoplastic elastomer known to be useful in hose constructions.

The equality of tension under which the first braid member and second braid member are applied to the underlying structure is critical to the operation of this invention. The equal tension on each of the component members of the braided spiral is important in two aspects of this invention. The first is that the balanced tension on the braided components allows for a non-mandrel technique to be utilized in hose building since the balanced tension assures that no twisting force is put on the underlying elastomeric tube during its progress through the one or more braiding decks. The second important aspect of this equal braid member tension is in the finished hose where the equal tension assures that a stable non-twisting finished hose is produced upon completion of the curing step. The angle at which the first and second braid members are applied in the braided spiral sleeve is dependent upon the degree of crush resistance required and the amount of internal burst resistance required in the application. It has been found that the braid angles may vary between 45° and 65° when braid angle is measured as the included angle between the braid element and the longitudinal axis of the hose. The preferred range of braid angle is 50°—60°. Optimal crush resistance is achieved using a braid angle between 53° and 60°.

Figure 2 is a cross-sectional view of the braided spiral sleeve taken along line 2—2 which shows more clearly the configuration of the first and second braid members 3 and 4 respectively after the braiding step has been completed. The relatively stiff first braid member 3 is shown in cross-section as a smooth uncrimped circle which shows more clearly the smooth helical path of the first braid member. In cross-section the first braid member 3 is shown to clearly lie in a smooth cylindrical surface having a diameter equal to the diameter of the braided spiral sleeve. An alternative description might be that first braid member 3 lies within an annular ring of indeterminate length having a width substantially equal to the diameter of said first braid member 3. Second braid member 4 is shown in cross-section to be deformed around the first braid member 4 at each contact point. Thus unlike the conventional braiding methods in which each braid member is deformed around the other, in the method of this invention the first braid member is uncrimped while only the second braid member is deformed or crimped around the first braid member.

Figure 3 is a cross-section of the braided spiral layer in isolation, taken along line 3—3 on Figure 1. This figure shows the course of the second braid member 4 around the circumference of the braided spiral sleeve 2. It can be clearly seen that the second braid member 4 deforms around the first member during the braiding operation since it is composed of a more flexible material than the first braid member. Figure 3a shows an enlarged section of Figure 3 depicting more clearly the plurality of filaments which constitute the second braid member 4.

Figure 4 is a simplified schematic representation of the method of manufacturing. Solid and flexible mandrel methods may be employed in the manufacture of this hose. Due to the cost and speed advantages inherent in non-mandrel techniques the preferred manufacturing method of this invention is a non-mandrel method for producing a braided spiral hose. An unsupported elastomeric tube member 51 is produced using conventional tube making equipment such as an extruder 52. Tube member 51 may optionally have positive pressure applied inside to assist in maintaining its circular cross-section. Figure 4 shows the elastomeric tube 51 being fed directly to a braider 53 for application of the braided spiral sleeve. It should be noted that the process for manufacturing the elastomeric tube may be such that it is desirable for the elastomeric tube to be produced in a separate step and later fed into the braider 53. Conventional braider equipment may be utilized provided that equal tensioning of the individual braid members can be maintained. The braider may apply one or more braided sleeves to the elastomeric tube in a single pass. The carriers of the braider which wind a braid member in a first direction must carry the first braid member, a relatively stiff monofilament. The carriers which apply the second braid member from the opposite direction should carry the second braid member material. The second braid member is substantially more flexible than the first braid member and will deform around the stiff first braid member during the braiding operation.

If a conventional braid reinforcement sleeve is being applied in addition to one or more braided spiral sleeves, both sets of carriers of the braider are loaded with conventional textile reinforcement materials. Once the desired number of braided spiral sleeves and conventional braided sleeves have been applied an elastomeric cover material may optionally be applied over the braided sleeves by cover applicator 54. Any conventional process for application of cover layers to a hose may be utilized with the most common method being the use of a cross-head extruder. The uncured composite hose 55 exits from the cover applicator 54 and proceeds to the curing process 56. The curing process may be any conventionally known method of curing or vulcanizing hose. The preferred methods are those in which the uncured composite hose is subjected to the high temperature curing environment immediately with no intervening steps. These methods include open steam curing, fluidized bed curing, continuous vulcanization using heat transfer media such as molten salts or hot oil. These direct curing methods are preferred due to the simplicity, efficiency and resulting low cost. Other more expensive curing methods employing additional preparation steps may be utilized to produce the hose of this invention. These include lead press curing in which a coating of molten lead is applied to the uncured hose composite; solidified; and then put in open steam curing or autoclave equipment for vulcanization. Another curing method in which an additional step is required is the fabric-wrap method in which fabric is spiraled over the uncured hose composite for the purpose of applying external pressure to the composite prior to the introduction of the uncured hose composite to the high temperature curing conditions. The most preferred method of manufacturing this hose is by low cost, non-mandrel manufacturing techniques which are not generally compatible with the more expensive curing methods such as lead press or fabric wrap techniques.

Figure 5 illustrates an exemplary embodiment of a fluid transfer system 40 which is adapted for transport of flammable liquids such as gasoline or fuel oil. The braided spiral hose 41 of this invention is used in combination with a first coupling 42 which is securely fastened to a first end of the hose 41 to form a fluid-tight seal. The braided spiral hose 41 is similar in all respects to the hose 10 of Figure 1. A second coupling 43 is securely fastened to a second end of the hose 41 to form a fluid-tight seal. Couplings 42 and 43 are well known and conventional in all respects and may be selected for the particular application by one skilled in this art. First coupling 42 is attached to a dispensing nozzle 45. The attachment may be rotatable or fixed. Second coupling 43 is attached to a pumping apparatus 44, shown as a conventional gasoline pump. The pumping apparatus delivers fluid to the fluid transfer system from a fluid storage means, not shown. The dispensing nozzle 45 transfers fluid to a receiving tank such as an automobile tank.

A preferred embodiment of this invention was manufactured for use in a fluid transfer system as illustrated in Figure 4 using an elastomeric tube composed of rubber (NBR) blended with polyvinyl chloride (PVC) for use with gasoline or diesel fuels. The unsupported tube was extruded continuously with no supporting mandrel and fed to a multideck braider. A conventional rayon textile braid was applied in a sleeve directly over the elastomeric tube. An insulating layer of NBR rubber was then applied after the first rayon textile braid. The braided spiral sleeve was applied over the insulating layer of rubber. The braided spiral layer was composed of a first braid member of 0.7 millimeter polyester monofilament and a second braid member of rayon textile yarn braided in the opposite direction. The braid angle utilized was 60° in order to optimize kink resistance and crush resistance and limit expansion of the hose under internal pressure. The first and second braid members were applied under equal tension of 2.5 pounds (17 kPa). An NBR/PVC cover was then applied by cross-head extrusion over the braided spiral layer. A wire ribbon extending the full length of the hose was laid longitudinally under the first textile braid for the purpose of conducting static electricity. This conductive or bonding wire is required in the gasoline dispensing hose specifications to dissipate static charges and conduct any charges to ground. The uncured hose composite was then cured in open steam.

**Claims**

1. A flexible hose (10) having an elastomeric tube (1) with an overlying braided reinforcement member, said reinforcement member being composed of a braided spiral sleeve (2) having a first braid member (3) and a second braid member (4), said first braid member being composed of at least one strand of a relatively stiff, uncrimped monofilament helically wound about said elastomeric tube (1), said second braid member (4) being composed of a plurality of relatively flexible, crimped textile filaments helically wound oppositely to said first braid member (3) and interwoven with said first braid member such that said second braid member (4) is crimped at each point of contact with said first braid member (3), characterized in that both braid members are wound under equal tension.

2. A flexible hose (10) according to Claim 1 characterized in that said first braid member (3) is wound in a smooth helical pattern around said elastomeric tube (1) and wherein said first braid member (3) lies substantially in an imaginary cylindrical surface radially spaced from said elastomeric tube (1) a distance substantially equal to the diameter of said first braid member (3).

3. A flexible hose (10) according to Claim 1 or 2 characterized in that said uncrimped monofilament has a diameter of from about 0.1 to about 10 mm.

4. A flexible hose (10) according to any of the preceding claims characterized in that a second braided sleeve (5) is disposed between said braided spiral sleeve (2) and said elastomeric tube (1), said second braided sleeve (5) being composed of crimped textile yarns.

5. A flexible hose (10) according to any of the preceding claims characterized in that said uncrimped monofilament is selected from the group consisting of polyesters, copolyesters, aromatic polyamides, non-aromatic polyamides and fiberglass.

6. A flexible hose (10) according to any of the preceding claims characterized in that said first braid member (3) is braided with said second braid member (4) at a braid angle greater than 54 degrees.

7. A non-mandrel method of manufacturing a flexible hose (10) as described in any of the preceding claims characterized by extruding an unsupported elastomeric tube and applying a braided spiral sleeve around said elastomeric tube such that the tensions of the first and second braid members are substantially equal.

8. A method as set forth in claim 7 characterized by the steps of applying an elastomeric cover (7) surrounding said braided spiral sleeve to form an uncured hose composite and curing said uncured hose composite.

**Patentansprüche**

1. Flexibler Schlauch (10) mit einem elastomeren Schlauch (1) mit einem darüberliegenden geflochtenen Verstärkungselement, wobei das Verstärkungselement aus einer geflochtenen spiralförmigen Hülse (2) mit einem ersten Flechtelement (3) und einem zweiten Flechtelement (4) besteht, wobei das erste Flechtelement aus wenigstens einer Litze aus einem relativ steifen ungefalteten Monofilament besteht, das schraubenförmig um den elastomeren Schlauch (1) gewickelt ist, wobei das zweite Flechtelement (4) aus einer Vielzahl von relativ flexiblen, gefalteten textilen Filamenten besteht, die schraubenförmig entgegengestzt zu dem ersten Flechtelement (3) gewickelt und mit dem ersten Flechtelement derart verwebt sind, daß das zweite Flechtelement (4) an jedem Kontaktpunkt mit dem ersten Flechtelement (3) gefaltet ist, dadurch gekennzeichnet, daß beide Flechtelemente unter gleicher Zugspannung gewickelt sind.

2. Flexibler Schlauch (10) nach Anspruch 1, dadurch gekennzeichnet, das erste Flechtelement (3) in einem gleichmäßigen schraubenförmigen Muster um den elastomeren Schlauch (1) gewikkelt ist und daß das erste Flechtelement (3) im wesentlichen in einer imaginären zylindrischen Fläche liegt, die in Radialrichtung von dem elastomeren Schlauch einen Abstand aufweist, der im wesentlichen gleich ist dem Durchmesser des ersten Flechtelementes (3).

3. Flexibler Schlauch (10) nach Anspruch 1 oder 2, dadurch gekennzeichnet, daß das ungefaltete Monofilament einen Durchmesser von etwa 0,1 bis etwa 10 mm aufweist.

4. Flexibler Schlauch (10) nach einem der vorhergehenden Ansprüche, dadurch gekennzeichnet, daß eine zweite geflochtene Hülse (5) zwischen der geflochtenen spiralförmigen Hülse (2) und dem elastomeren Schaluch (1) angeordnet ist und daß die zweite geflochtene Hülse (5) aus gefalteten textilen Garnen besteht.

5. Flexibler Schlauch (10) nach einem der vorhergehenden Ansprüche, dadurch gekennzeichnet, daß das ungefaltete Monofilament ausgewählt ist aus der Gruppe, die aus Polyestern, Copolyestern, aromatischen Polyamiden, nichtaromatischen Polyamiden und Glasfasern besteht.

6. Flexibler Schlauch (10) nach einem der vorhergehenden Ansprüche, dadurch gekennzeichnet, daß das erste Flechtelement (3) mit dem zweiten Flechtelement (4) unter einem Flechtwinkel von mehr als 54° geflochten ist.

7. Methode zur Herstellung eines flexiblen Schlauches (10) nach einem der vorhergehenden Ansprüche ohne Formkern, dadurch gekennzeichnet, daß ein selbsttragender elastomerer Schlauch extrudiert und eine geflochtene spiralförmige Hülse um den elastomeren Schlauch derart aufgebracht wird, daß die Zugspannungen des ersten und des zweiten Flechtelementes im wesentlichen gleich sind.

8. Methode nach Anspruch 7, gekennzeichnet durch die Schritte des Aufbringens einer elastomeren Abdeckung (7), die die geflochtene spiralförmige Hülse umgibt, um einen nicht ausgehärteten oder unvulkanisierten Schlauchverbund auszubilden, und Aushärten oder Vulkanisieren des nicht ausgehärteten oder unvulkanisierten Schlauchverbundes.

**Revendications**

1. Tuyau souple (10) comprenant un tube élastomère (1) pourvu d'un élément de renforcement tressé le recouvrant, cet élément de renforcement étant constitué par une gaine spirale tressée (2) comportant un premier élément de tresse (3) et un second élément de tresse (4), le premier élément de tresse étant constitué d'au moins un brin d'un fil monofilament relativement rigide, non ondulé et enroulé en hélice autour du tube élastomère (1), le second élément de tresse (4) étant constitué de plusieurs filaments textiles relativement flexibles, ondulés, enroulés en hélice d'une manière opposée au premier élément de tresse (3) et entrelacés avec ce premier élément de tresse, d'une façon telle que ce second élément de tresse (4) est ondulé en chaque point de contact avec le premier élément de tresse (3), caractérisé en ce que les deux éléments de tresse sont enroulés sous une tension égale.

2. Tuyau souple (10) suivant la revendication 1, caractérisé en ce que le premier élément de tresse (3) est enroulé suivant un motif hélicoïdal régulier autour du tube élastomère (1), ce premier élément de tresse (3) étant situé sensiblement suivant une surface cylindrique imaginaire espacée dans le sens radial par rapport au tube élastomère (1) d'une distance sensiblement égale au diamètre de ce premier élément de tresse (3).

3. Tuyau souple (10) suivant la revendication 1 ou 2, caractérisé en ce que le fil monofilament non ondulé a un diamètre d'environ 0,1 à environ 10 mm.

4. Tuyau souple (10) suivant l'une quelconque des revendications précédentes, caractérisé en ce qu'une seconde gaine tressée (5) est disposée entre ladite gaine spirale tressée (2) et le tube élastomère (1), cette seconde gaine tressée (5) étant constituée de fils textiles ondulés.

5. Tuyau souple (10) suivant l'une quelconque des revendications précédentes, caractérisé en ce que le fil monofilament non ondulé est choisi dans le groupe formé des polyesters, des copolyesters, des polyamides aromatiques, des polyamides non aromatiques et de la fibre de verre.

6. Tuyau souple (10) suivant l'une quelconque des revendications précédentes, caractérisé en ce que le premier élément de tresse (3) est tressé avec le second élément de tresse (4) sous un angle de tresse supérieur à 54 degrés.

7. Procédé de réalisation sans mandrin d'un tuyau souple et flexible (10) suivant l'une quelconque des revendications précédentes, caractérisé en ce qu'il consiste à extruder un tube élastomère non soutenu et à appliquer une gaine spirale tressée autour de ce tube élastomère de façon telle que les tensions des premier et second éléments de tresse sont sensiblement égales.

8. Procédé suivant la revendication 7, caractérisé en ce qu'on applique un recouvrement élastomère (7) entourant la gaine spirale tressée de façon à former un tuyau souple composite non vulcanisé et on vulcanise ce tuyau souple composite non vulcanisé.

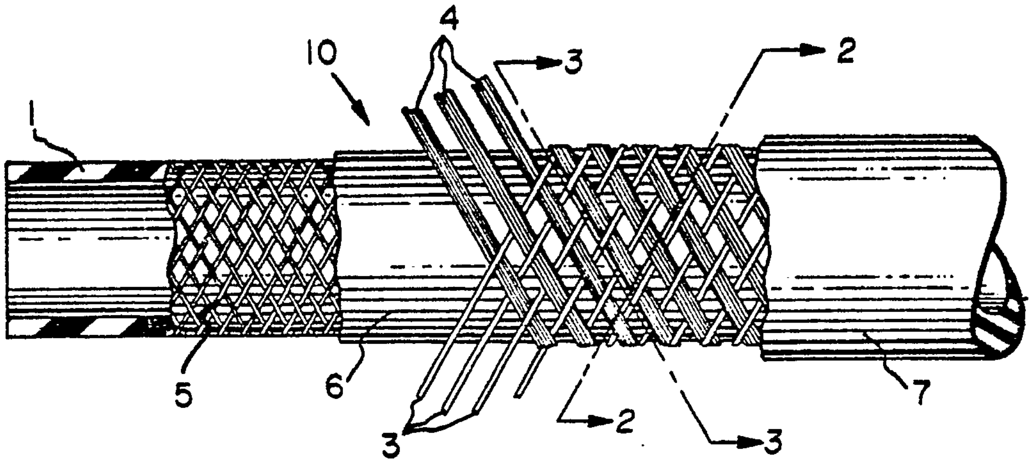


FIG.1

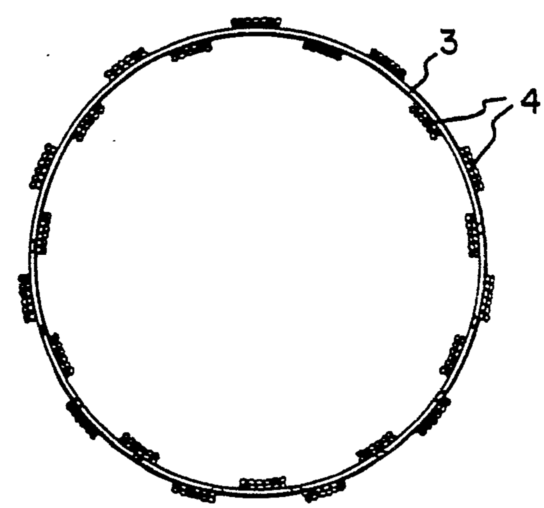


FIG.2

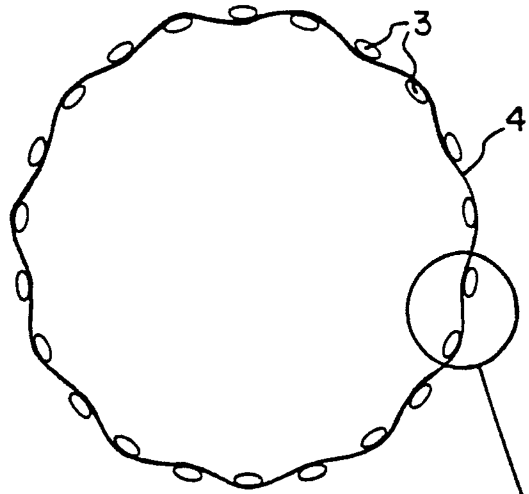


FIG.3

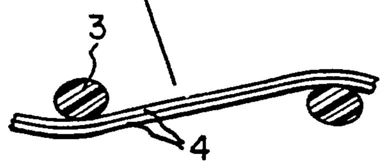


FIG. 3A

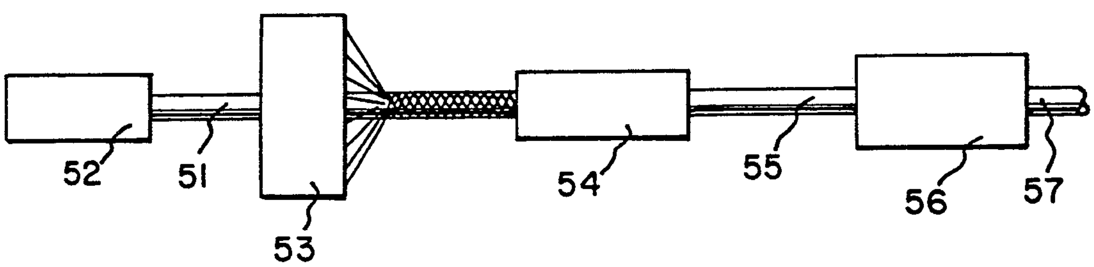


FIG.4

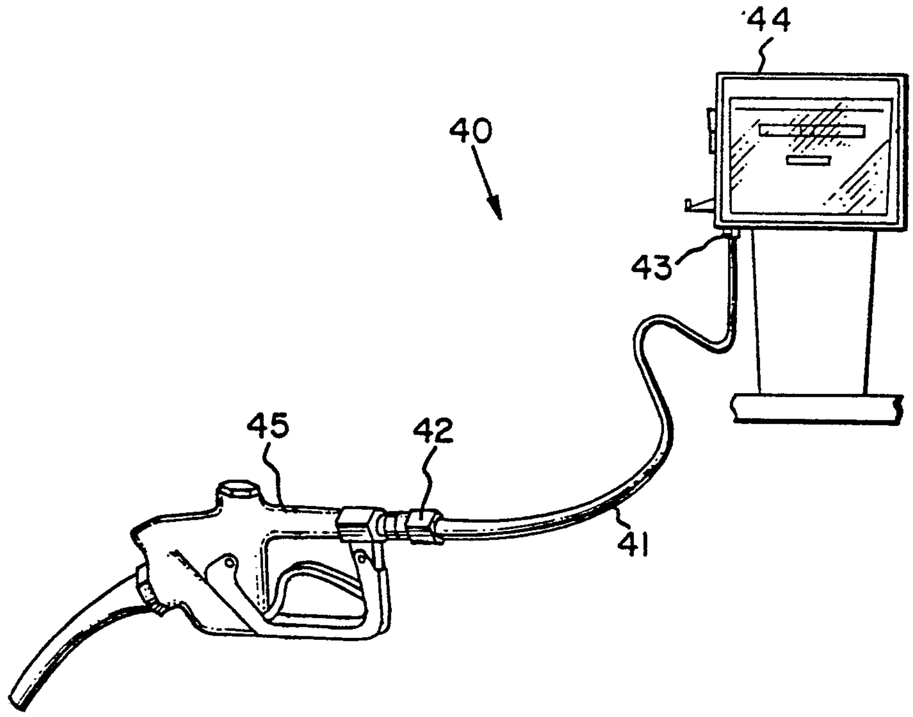


FIG.5